# EUROPÄISCHE PATENTANMELDUNG

(11) **EP 3 121 774 A1**
(43) Veröffentlichungstag der Anmeldung: **25.01.2017**
(21) Anmeldenummer: 16179901.0
(22) Anmeldetag: 18.07.2016
(51) Int. Cl.: G06Q 10/08

(54) **VERFAHREN UND ÜBERGABEVORRICHTUNG ZUR ÜBERGABE VON PERSONENBEZOGENEN SENDUNGEN**

(30) Priorität: 20.07.2015 DE 102015111748
(71) Anmelder: Deutsche Post AG, 53113 Bonn (DE)
(72) Erfinder: Wiechers, Dr. Ralph, 53508 Mayschoß (DE)
(74) Vertreter: Cohausz & Florack

(57) **Zusammenfassung**

Es wird ein Verfahren zur Übergabe wenigstens einer personenbezogenen Sendung (1) beschrieben
- bei dem wenigstens eine bereits personenbezogene Sendung (1) zur Abholung mit einem mit der personenbezogenen Sendung (1) verknüpften Fahrzeug (5) in einer Übergabeeinrichtung (3) hinterlegt wird,
- bei dem ein mit der personenbezogenen Sendung (1) verknüpftes Fahrzeug (5) zur Übergabeeinrichtung (3) fährt,
- bei dem die Berechtigung des mit der personenbezogenen Sendung (1) verknüpften Fahrzeugs (5) und/oder die Berechtigung eines zur Entgegennahme der personenbezogenen Sendung (1) berechtigten Abholers (8) durch die Übergabeeinrichtung geprüft wird,
- bei dem die personenbezogene Sendung (1) bei erfolgreicher Berechtigungsprüfung durch die Übergabeeinrichtung (3) an das mit der personenbezogenen Sendung (1) verknüpfte Fahrzeug (5) übergeben wird, so dass der Abholer (8) die personenbezogene Sendung (1) aus dem Fahrzeug (5) entgegennehmen kann und/oder in das mit der personenbezogenen Sendung (1) verknüpfte Fahrzeug (5), insbesondere in den Innenraum, auf eine Ladefläche und/oder einen Kofferraum (15) des Fahrzeugs (5), übergeben wird.

## Beschreibung

### Gebiet

Die Erfindung betrifft ein Verfahren zur Übergabe wenigstens einer personenbezogenen Sendung und eine Übergabevorrichtung zur Durchführung eines solchen Verfahrens.

### Hintergrund

Verfahren und Vorrichtungen zur Übergabe von Gütern, insbesondere Stückgütern oder verpackten Gütern, sind in unterschiedlicher Ausgestaltung bekannt. Die Verfahren und Vorrichtungen sind dabei oft zur Übergabe von nicht personenbezogen bereitgehaltenen Gütern vorgesehen. So sind Automaten bekannt, die Verbrauchsgüter, Lebensmittel oder Genussmittel bereithalten und kostenpflichtig an Personen abgeben. An wen die Güter abgegeben werden, steht erst unmittelbar vor der Übergabe der Güter fest. Anders verhält es sich mit personenbezogenen Sendungen. Diese sind für bestimmte Personen gedacht bzw. an bestimmte Personen adressiert. Das muss zwar nicht beuten, dass die Güter nur an diese Personen übergeben werden, allerdings soll auch keine Übergabe der personenbezogenen Sendungen an beliebige Personen erfolgen.

Um sicherzustellen, dass personenbezogene Sendungen nicht in unbefugte Hände gelangen, werden personenbezogene Sendungen entweder persönlich an hierfür berechtigte Personen übergeben oder es werden die personenbezogenen Sendungen in Schließfächern etwa von Paketautomaten, sogenannten Packstationen, oder dergleichen hinterlegt. Die Schließfächer können zu einem späteren Zeitpunkt von der berechtigten Person mit einer Zugangskarte, einem Code oder anderweitig geöffnet werden, um die personenbezogenen Sendungen aus den Schließfächern zu entnehmen. Dieses Vorgehen hat sich zwar bewährt, allerdings ist der Komfort für den Adressaten der personenbezogenen Sendung oder einer zur Entgegennahme der personenbezogenen Sendung berechtigten Person noch nicht zufriedenstellend.

Wird die personenbezogene Sendung zum Adressaten derselben oder zu einer zur Entgegennahme berechtigten Person gebracht, ist dies nicht nur mit einem entsprechenden Transportaufwand verbunden. Es besteht auch die Möglichkeit, dass der Adressat oder die zur Entgegennahme berechtigte Person nicht angetroffen wird, so dass die Übergabe nicht bewirkt werden kann und ein weiterer Übergabeversuch am selben oder einem anderen Ort erfolgen muss. Das erhöht den logistischen Aufwand erheblich und kann dazu führen, dass der Adressat der personenbezogenen Sendung oder die zur Entgegennahme berechtigte Person erst recht spät in den Besitz der personenbezogenen Sendung gelangt.

Wenn der Adressat der personenbezogenen Sendung oder die zur Entgegennahme der personenbezogenen Sendung berechtigte Person die Sendung an einer Sammelstelle, etwa einer Filiale eines die personenbezogene Sendung transportierenden Unternehmens, abholt, ist dies oft zeitintensiv und mühsam. Dies gilt insbesondere bei einer persönlichen Übergabe der personenbezogenen Sendung, da dann oft noch Wartezeit anfällt, bis der Adressat der personenbezogenen Sendung oder die zur Entgegennahme derselben berechtigte Person die Sendung entgegennehmen kann. Bei Abholung der personenbezogenen Sendung aus einem Schließfach oder einer Packstation muss sich der Adressat der personenbezogenen Sendung oder die zur Entgegennahme der personenbezogenen Sendung berechtigte Person zu dem Schließfach oder der Packstation begeben und die Sendung dort entgegennehmen, dies kann ebenfalls mühsam sein, insbesondere wenn die Sendung größer oder schwerer ist oder wenn der Abholer in seiner Mobilität eingeschränkt ist.

**Zusammenfassung einiger beispielhafter Ausführungsformen der Erfindung**

Der vorliegenden Erfindung liegt die Aufgabe zugrunde, das Verfahren und die Vorrichtung jeweils der eingangs genannten und zuvor näher beschriebenen Art derart auszugestalten und weiterzubilden, dass eine komfortablere Übergabe einer personenbezogenen Sendung an den Adressat oder eine zur Entgegennahme berechtigten Person erfolgen kann.

Diese Aufgabe ist gemäß Anspruch 1 gelöst durch ein Verfahren zur Übergabe wenigstens einer personenbezogenen Sendung,
- bei dem wenigstens eine bereits personenbezogene Sendung zur Abholung mit einem mit der personenbezogenen Sendung verknüpften Fahrzeug in einer Übergabeeinrichtung hinterlegt wird,
- bei dem ein mit der personenbezogenen Sendung verknüpftes Fahrzeug zur Übergabeeinrichtung fährt,
- bei dem die Berechtigung des mit der personenbezogenen Sendung verknüpften Fahrzeugs und/oder die Berechtigung eines zur Entgegennahme der personenbezogenen Sendung berechtigten Abholers durch die Übergabeeinrichtung geprüft wird,
- bei dem die personenbezogene Sendung bei erfolgreicher Berechtigungsprüfung durch die Übergabeeinrichtung an das mit der personenbezogenen Sendung verknüpfte Fahrzeug übergeben wird, so dass der Abholer die Sendung aus dem Fahrzeug entgegennehmen kann und/oder in das mit der personenbezogenen Sendung verknüpfte Fahrzeug, insbesondere in den Innenraum, auf eine Ladefläche und/oder einen Kofferraum des Fahrzeugs, übergeben wird.

Die zuvor genannte Aufgabe ist auch gemäß Anspruch 16 durch eine Übergabeeinrichtung zur Durchführung des Verfahrens nach einem der Ansprüche 1 bis 15, mit wenigstens einer Lagereinheit zum Lagern wenigstens einer personenbezogenen Sendung mit einer Prüfeinheit zur Prüfung einer Berechtigung eines Abholers und/oder eines Fahrzeugs und mit einer Transporteinheit zum Transport der personenbezogenen Sendung von der wenigstens einen Lagereinheit an und/oder in ein Fahrzeug gelöst.

Verfahrensmäßig wird zunächst wenigstens eine personenbezogene Sendung in der Übergabeeinrichtung hinterlegt. Die Sendung ist dabei beispielsweise einem bestimmten Adressaten oder einer Gruppe von Adressaten zugeordnet. Für das Hinterlegen der wenigstens einen personenbezogenen Sendung kann die Übergabeeinrichtung der Einfachheit halber wenigstens eine Lagereinheit aufweisen. Dabei erfolgt das Hinterlegen insbesondere zu dem Zweck der Abholung der personenbezogenen Sendung mittels eines mit der personenbezogenen Sendung verknüpften Fahrzeugs. Dabei ist keine direkte Verknüpfung der personenbezogenen Sendung mit dem Fahrzeug erforderlich, auch wenn dies durchaus bevorzugt sein kann, etwa um eine Anonymität zu wahren, Fehler bei der Berechtigungsprüfung zu vermeiden oder das Verfahren zu vereinfachen. Auch dann wird die Sendung im Sinne der vorliegenden Erfindung jedoch als personenbezogen verstanden, obwohl es sich im klassischen Sinne eher um eine Sachbezogenheit denn eine Personenbezogenheit der wenigstens einen Sendung handelt. Gleichwohl ist ein Fahrzeug oftmals wenigstens einer Person, etwa dem Halter und/oder wenigstens einem Fahrer zugeordnet. Besonders bevorzugt wird es im Regelfall jedoch sein, wenn die Sendung einer tatsächlichen Person, etwa dem Adressaten der personenbezogenen Sendung, zugeordnet ist, um eine Übergabe der personenbezogenen Sendung an eine nicht berechtigte Person zu vermeiden. Deswegen wird der leichteren Verständlichkeit halber weiter der Begriff der personenbezogenen Sendung verwendet, auch wenn es sich dabei bedarfsweise um eine sachbezogene Sendung, insbesondere fahrzeugbezogene Sendung, handeln kann. Dieses allgemeinere Verständnis von personenbezogenen Sendungen erleichtert die Erläuterung der Erfindung, da durchgängig derselbe Begriff verwendet werden kann und nicht jeweils im Einzelnen zwischen verschiedenen Begriffen unterschieden werden muss.

In diesem Zusammenhang ist weiter zu beachten, dass der Abholer, sei es der Adressat der personenbezogenen Sendung oder eine berechtigte Person, zur Abholung der Sendung mit einem Fahrzeug an der Übergabeeinrichtung vorfährt. Das Fahrzeug des Abholers kann also durch und über den Abholer mit der personenbezogenen Sendung verknüpft sein. Indem sich der Abholer als berechtigt für das Abholen der personenbezogenen Sendung zu erkennen gibt, kann die Übergabeeinrichtung das Fahrzeug des Abholers, also das Fahrzeug mit dem der Abholer zur Abholung an der Übergabeeinrichtung erschienen ist, der personenbezogenen Sendung zuordnen. Damit ergibt sich bei gleichzeitiger Zuordnung der personenbezogenen Sendung zum Abholer eine Verknüpfung der personenbezogenen Sendung mit dem Fahrzeug des Abholers. Die Verknüpfung der wenigstens einen personenbezogenen Sendung mit dem wenigstens einen Fahrzeug kann bedarfsweise aber auch auf andere Weise erfolgen, und zwar ohne direkte Zuordnung über die zur Abholung berechtigte Person oder den Adressaten der wenigstens einen personenbezogenen Sendung, bedarfsweise über das amtliche Kennzeichen oder andere individuelle Merkmale des Fahrzeugs. Dies kann insbesondere bei autonom, also ohne Fahrer, fahrenden Fahrzeugen von besonderem Interesse sein.

Bei dem Fahrzeug handelt es sich ganz grundsätzlich vorzugsweise um einen Personenkraftwagen oder einen Kleinlaster. Derartige Fahrzeuge können nicht nur problemlos an der Übergabeeinrichtung vorfahren. Auch das Übergeben einer personenbezogenen Sendung an oder in ein solches Fahrzeug oder Automobil kann zweckmäßig erfolgen. Es kommen aber auch andere Fahrzeuge in Frage, nämlich beispielsweise auch ein Quad oder ein Zweirad, etwa Fahrrad, Motorrad, Moped oder Roller. Prinzipiell kann das Fahrzeug auch ein Anhänger oder ein Wasserfahrzeug, wie etwa ein Boot oder dergleichen, sein. Zum Fahren im Sinne der Erfindung benötigt das Fahrzeug also nicht zwingend Räder.

So kann die Übergabevorrichtung beim Hinterlegen der personenbezogenen Sendung beispielsweise wenigstens eine Information über wenigstens ein zur Abholung der personenbezogenen Sendung berechtigtes Fahrzeug erfassen oder es kann der Übergabeeinrichtung diese Information übermittelt werden. Ein Erfassen der entsprechenden Information kommt insbesondere dann in Frage, wenn die Information auslesbar auf oder in der personenbezogenen Sendung angeordnet ist. Es versteht sich dabei jedoch, dass der Übergabeeinrichtung alternativ oder zusätzlich auch eine Information übermittelt werden kann bzw. die Übergabeeinrichtung von der personenbezogenen Sendung eine Information erfasst, welche wenigstens einer zur Entgegennahme berechtigten Person zugeordnet ist. Die Zuordnung der Information muss dabei keine feste oder eindeutige Zuordnung sein. Es kann sich beispielsweise um eine auf einer Berechtigungskarte oder dergleichen abgespeicherte Information handeln, wobei die personenbezogene Sendung an eine beliebige Person übergeben werden kann, sofern sie im Besitz der Berechtigungskarte ist. Damit ist die beliebige Person im Sinne des Verfahrens aber keine beliebige Person mehr, sondern eine zur Entgegennahme der personenbezogenen Sendung berechtigte Person, da diese infolge des Besitzes der Berechtigungskarte oder dergleichen eine Berechtigungsprüfung erfolgreich abschließen kann. Dabei kann die Berechtigung grundsätzlich auch auf eine andere, evtl. übertragbare, Weise als einer Berechtigungskarte nachgewiesen werden.

Bei der personenbezogenen Sendung kann es sich grundsätzlich um unterschiedliche Gegenstände handeln, die unterschiedliche Formen, Größen und Gewichte haben können. Vorzugsweise sind die personenbezogenen Sendungen mit überschaubarem Aufwand zu transportieren und insbesondere von einer Person ohne größere Probleme über wenigstens eine kurze Distanz zu tragen sind. Bei der wenigstens einen personenbezogenen Sendung kann es sich etwa um einen Gegenstand in Form eines Stückguts oder eines umverpackten Guts, etwa eines verpackten Schüttguts, handeln. Insbesondere können die Sendungen Gegenstände des täglichen Bedarfs, wie Verbrauchsmaterialien oder Lebensmittel, sowie technische Gegenstände und Gerätschaften sein. Bevorzugt handelt es sich bei der wenigstens einen Sendung um eine Briefsendung, Paketsendung und/oder Flyer. Ein Flyer kann dabei bedarfsweise auch eine Broschüre, eine Zeitschrift und/oder ein Prospekt sein, während eine Paketsendung neben einem Paket auch ein Päckchen sein kann. Zudem kann eine Briefsendung neben einem Brief auch eine Postkarte sein.

Besonders bevorzugt handelt es sich bei der wenigstens einen personenbezogenen Sendung jedoch um eine Sendung, die nicht ohne Weiteres in einen gebräuchlichen Briefkasten eingesteckt werden kann, da dann die Vorteile des Verfahrens und der Übergabeeinrichtung besonders zum Tragen kommen. Kleine personenbezogene Sendungen wie etwa Briefsendungen erfordern keine unmittelbare Übergabe, sondern können einfach im Briefkasten des Adressaten hinterlegt werden, der die Briefsendung zu einem späteren Zeitpunkt aus dem Briefkasten entnehmen kann. Allerdings kann es dennoch zweckmäßig sein, eine Briefsendung in einer Übergabeeinrichtung zu hinterlegen, etwa wenn der Adressat oder eine berechtigte Person dadurch früher in den Besitz der Briefsendung gelangt. Dies ist etwa der Fall, wenn sich die betreffende Person tagsüber näher an der Übergabeeinrichtung als an ihrem Zuhause aufhält. Alternativ oder zusätzlich können aber auch unnötige Transportwege eingespart werden, wenn die Briefsendung nicht in den Briefkasten des Adressaten eingebracht, sondern in der Übergabeeinrichtung hinterlegt wird. Die vorgenannten Vorteile kommen aber grundsätzlich insbesondere bei größeren Sendungen, beispielsweise Paketsendungen, zur Geltung, da der Transport und das Handling größerer Sendungen grundsätzlich aufwendiger sind.

Zum Abholen der wenigstens einen personenbezogenen Sendung fährt ein mit dieser Sendung verknüpftes Fahrzeug zur Übergabeeinrichtung. Die Übergabeeinrichtung prüft dann, ob es sich um ein mit einer in der Übergabeeinrichtung hinterlegten personenbezogenen Sendung verknüpftes Fahrzeug handelt. Ist dies der Fall, entspricht dies der Berechtigung des mit der personenbezogenen Sendung verknüpften Fahrzeugs zur Abholung der personenbezogenen Sendung. Es kann von der Übergabeeinrichtung aber alternativ oder zusätzlich die Berechtigung eines zur Abholung der personenbezogenen Sendung berechtigten Abholers geprüft werden. In diesem Fall wird geprüft, ob der Abholer mit der wenigstens einen personenbezogenen Sendung verknüpft ist. Eine derartige Verknüpfung gilt dann bedarfsweise als entsprechende Berechtigung der zur Entgegennahme der personenbezogenen Sendung berechtigten Person oder des zur Entgegennahme der personenbezogenen Sendung berechtigten Fahrzeugs. Zur Prüfung der Berechtigung des Fahrzeugs und/oder der zur Abholung berechtigten Person stehen unterschiedliche an sich bekannte Methoden zur Wahl.

Zudem können bedarfsweise unterschiedliche Personen zur Abholung der Sendung berechtigt sein. Beispielsweise trifft dies auf einen Adressaten der Sendung zu. Alternativ oder zusätzlich kann aber auch wenigstens eine andere Person als berechtigter Abholer spezifiziert sein. Dabei wird unter einem Abholer grundsätzlich eine Person verstanden, die mit einem Fahrzeug zur Übergabeeinrichtung fährt, um eine personenbezogene Sendung abzuholen. Die Übergabe der personenbezogenen Sendung durch die Übergabeeinrichtung an das Fahrzeug, bedarfsweise an den sich im Fahrzeug befindlichen Abholer, erfolgt jedoch nur für den Fall, dass der Abholer oder das Fahrzeug zur Entgegennahme der personenbezogenen Sendung berechtigt ist. Die Berechtigung des Abholers kann sich dabei beispielsweise aus dem Umstand ergeben, dass der Abholer auch der Adressat der personenbezogenen Sendung ist oder etwa vom Adressaten zur Abholung oder auf sonstige Weise berechtigt ist. Diese Berechtigung kann sich dadurch ergeben, dass dem Abholer beispielsweise eine Berechtigungsinformation oder ein die Berechtigungsinformation enthaltendes Mittel zur Berechtigung übergeben wird, die eine erfolgreiche Berechtigungsprüfung durch die Übergabeeinrichtung erlaubt.

Die Berechtigung des mit der personenbezogenen Sendung verknüpften Fahrzeugs und/oder die Berechtigung eines zur Abholung der personenbezogenen Sendung berechtigten Abholers wird durch die Übergabeeinrichtung geprüft. Diese Prüfung erfolgt dabei insbesondere autonom. Dabei wird unter einer autonomen Prüfung der Berechtigung eine solche verstanden, die ohne einen manuellen Eingriff einer Bedienperson auskommt. Auch hier kommen wieder mehrere Möglichkeiten der Berechtigungsprüfung in Frage. Eine besonders einfache Möglichkeit der Berechtigungsprüfung besteht darin, eine vom Abholer und/oder dem Fahrzeug zur Abholung der wenigstens einen personenbezogenen Sendung für die Übergabeeinrichtung bereitgestellte Berechtigungsinformation, etwa in Form eines Codes, mit einer Prüfinformation zu vergleichen, die der personenbezogenen Sendung zugeordnet ist. Stimmen beide Informationen überein, kann bedarfsweise von einer Berechtigung zur Entgegennahme der wenigstens einen personenbezogenen Sendung ausgegangen werden. Es kann aber beispielsweise auch vorgesehen sein, dass die der Berechtigungsprüfung zugrunde liegende Berechtigungsinformation und der Prüfinformation auf eine bestimmt Art und Weise, etwa einem bestimmten Algorithmus, miteinander verknüpft sind. Dies kann die Wahrscheinlichkeit verringern, dass unberechtigte Personen Zugang zu der wenigstens einen personenbezogenen Sendung erhalten.

Die vom Fahrzeug und/oder dem Abholer zur Berechtigungsprüfung bereitgestellte Berechtigungsinformation kann zur Entgegennahme von mehreren personenbezogenen Sendungen verwendet werden, insbesondere wenn diese zu unterschiedlichen Zeiten, insbesondere unterschiedlichen Tagen, und/oder an unterschiedlichen Übergabeeinrichtungen entgegengenommen werden. Um zu vermeiden, dass unberechtigte Personen diese Berechtigungsinformation zur Entgegennahme von personenbezogenen Sendungen nutzen, kann es erforderlich sein, für jede Sendung oder in bestimmten Zeitintervallen unterschiedliche Berechtigungsinformationen für die Prüfung der Berechtigung durch das Fahrzeug oder den Abholer bereitzustellen. Besonders einfach und zweckmäßig kann es dabei sein, wenn dem Adressaten oder einer für die Abholung berechtigten Person ein Code, beispielsweise für wenigstens im Wesentlichen jede abzuholende Sendung ein separater Code, übermittelt wird, der dann bei Abholung der personenbezogenen Sendung der Übergabeeinrichtung zur Berechtigungsprüfung bereitgestellt wird.

Im Falle einer erfolgreich abgeschlossenen Berechtigungsprüfung kann die personenbezogene Sendung mittels der Übergabeeinrichtung, insbesondere autonom, also ohne Eingriff einer Bedienperson, an das mit der personenbezogenen Sendung verknüpfte Fahrzeug übergeben werden. Dies kann dabei so erfolgen, dass die zur Entgegennahme der personenbezogenen Sendung berechtigte Person die personenbezogene Sendung aus dem Fahrzeug entgegennehmen kann. Der Abholer braucht dann sein Fahrzeug nicht zu verlassen, was insbesondere dann der Fall sein kann, wenn der Abholer die personenbezogene Sendung durch ein Seitenfenster, insbesondere das Seitenfenster auf der Fahrerseite, entgegennehmen kann. Der Abholer oder der Fahrer des Fahrzeugs muss bedarfsweise lediglich das entsprechende Seitenfenster öffnen und bei Bedarf nach erfolgter Übergabe der personenbezogenen Sendung wieder schließen. Dies kann bedarfsweise aber auch durch die Übergabeeinrichtung bewirkt werden, so dass der Abholer oder der Fahrer des Fahrzeugs insoweit entlastet wird. Eine Übergabe der personenbezogenen Sendung durch ein Seitenfenster kommt dabei insbesondere für Automobile, insbesondere Personenkraftwagen oder Kleinlaster, in Frage. Handelt es sich bei dem Fahrzeug aber um ein Quad, ein Zweirad, ein Anhänger oder ein Boot, so wird beispielsweise eher eine direkte Übernahme der personenbezogenen Sendung durch den Abholer in Frage kommen, ohne dass dabei ein Seitenfenster involviert sein muss.

Es kann alternativ aber auch vorgesehen sein, dass die personenbezogene Sendung durch die Übergabeeinrichtung in das mit der personenbezogenen Sendung verknüpfte Fahrzeug, insbesondere in den Innenraum, auf eine Ladefläche, in eine Ladebox, insbesondere etwa eines Pickups, Zweirads, Quads oder Boots, und/oder in einen Kofferraum des Fahrzeugs, übergeben wird. Dies bedeutet, dass der Abholer die personenbezogene Sendung nicht entgegennehmen muss. Es kann aber erforderlich sein, vorher eine Tür des Fahrzeugs zu öffnen. Unter einer Tür im Sinne der Erfindung wird bedarfsweise insbesondere auch eine Hecktür, vorzugsweise eine Heckklappe oder ein Kofferraumdeckel verstanden. Die Tür kann aber auch eine Tür, eine Klappe oder ein Deckel einer Ladebox sein, die vom Fahrzeug zur Aufnahme von Gütern und/oder Sendungen getragen wird. Das Öffnen der Tür kann wiederum vom Abholer selbst bewirkt werden oder es kann von der Übergabeeinrichtung bewirkt werden. Dann wird die personenbezogene Sendung vorzugsweise durch eine geeignete Transporteinheit in das Fahrzeug gelegt. Nach dem Übergeben der personenbezogenen Sendung muss bedarfsweise die Tür wider geschlossen werden, was der Abholer übernehmen kann oder von der Übergabeeinrichtung übernommen werden kann.

In diesem Zusammenhang ist zu beachten, dass das Öffnen und Schließen eines Seitenfensters oder einer Tür händisch und oder elektrisch erfolgen kann. Ebenso kann ein Entriegeln oder Verriegeln einer Tür und/oder eines Seitenfensters sowohl händisch und oder elektrisch erfolgen, wenn dies bedarfsweise neben dem Öffnen und Schließen der Tür erforderlich oder gewünscht ist. Auf diese Weise können der Komfort und die Funktionalität des Verfahrens verbessert werden.

Die eingangs genannte Aufgabe ist ferner durch eine Übergabeeinrichtung zur Durchführung des Verfahrens nach einem der Ansprüche 1 bis 16 gelöst, bei der wenigstens eine Lagereinheit zum Lagern wenigstens einer personenbezogenen Sendung, eine Prüfeinheit zur Prüfung einer Berechtigung eines Abholers und/oder eines Fahrzeugs und eine Transporteinheit zum Transport der personenbezogenen Sendung an und/oder in ein Fahrzeug vorgesehen sind.

Durch eine derartige Übergabeeinrichtung werden auf konstruktiv und steuerungstechnisch einfache Weise die bereits im Zusammenhang mit dem Verfahren zur Übergabe personenbezogener Sendungen dargelegten Vorteile erreicht.

Dabei kann eine Lagereinheit der Lagerung einer personenbezogenen Sendung oder auch mehrerer personenbezogener Sendungen dienen, bis diese von einer berechtigten Person oder einem berechtigten Fahrzeug abgeholt werden. Es können bevorzugt aber auch mehrere Lagereinheiten vorgesehen sein, die jeweils wenigstens eine personenbezogene Sendung aufweisen können. Letztlich können die Lagerung, das Bereithalten und die Ausgabe der personenbezogenen Sendungen mit aus dem Stand der Technik bekannten Verfahren und Vorrichtungen erfolgen. Deshalb braucht hierauf vorliegend nicht weiter eingegangen zu werden. Die Lagereinheit kann dabei auch Mittel umfassen, welche es erlauben, eine Vielzahl von separat zur Abholung bereitgehaltener personenbezogener Sendungen platzsparend zu lagern, etwa zu stapeln, und aus den gelagerten personenbezogenen Sendungen, insbesondere durch Umsortieren oder Umstapeln der Lagereinheiten jeweils die als nächstes zu übergebende personenbezogene Sendung für weitere Schritte bereitzustellen, etwa um die personenbezogene Sendung mit einer Transporteinheit an und/oder in das Fahrzeug zu transportieren.

Bevor diese Übergabe der wenigstens einen personenbezogenen Sendung erfolgt, erfolgt jedoch eine Prüfung der Berechtigung des Abholers und/oder des Fahrzeugs in einer Prüfeinheit der Übergabeeinrichtung. In der Prüfeinheit können beispielsweise Prüfinformationen mit Berechtigungsinformationen verglichen werden. Es kann auch ermittelt werden, ob die Prüfinformationen und die Berechtigungsinformationen auf vorbestimmte Weise miteinander in Beziehung stehen.

Die Prüfinformationen können über die Übergabeeinrichtung bedarfsweise mit einer Lagereinheit verknüpft sein, in der die der Prüfinformation zugeordneten personenbezogenen Sendungen zur Abholung bereitgehalten werden. Besonders einfach und zweckmäßig kann es sein, wenn die Übergabeeinrichtung eine leere Lagereinheit zur Hinterlegung einer neuen personenbezogenen Sendung anbietet, oder von der Übergabeeinrichtung erfasst wird, in welcher Lagereinheit die nächste personenbezogene Sendung hinterlegt wird. Wird nun eine Prüfinformation an die Übergabeeinrichtung übergeben, kann die Übergabeeinrichtung die Prüfinformation mit der entsprechenden Lagereinheit verknüpfen und auf diese Weise mit der in der entsprechenden Lagereinheit bereitgestellten personenbezogenen Sendung verbunden werden. Eine bestimmte personenbezogene Sendung kann dann ohne Weiteres an einen berechtigten Abholer oder ein berechtigtes Fahrzeug übergeben werden, wenn die Übergabeeinrichtung bespielweise in Kenntnis darüber ist, wo sich die der personenbezogenen Sendung zugeordnete Lagereinheit in der Übergabeeinrichtung befindet. Diese Lagereinheit oder die darin bereitgehaltene personenbezogene Sendung kann dann über eine Fördereinheit zu einer Transporteinheit gefördert werden, die der Übergabe der Sendung dient.

Bei einer ersten besonders bevorzugten Ausgestaltung des Verfahrens zur Übergabe einer personenbezogenen Sendung stellt das mit der personenbezogenen Sendung verknüpfte Fahrzeug und/oder der zur Abholung der personenbezogenen Sendung berechtigte Abholer wenigstens eine Berechtigungsinformation zur Prüfung der Berechtigung zur Abholung wenigstens einer personenbezogenen Sendung durch die Übergabeeinrichtung bereit. Dabei kann die Berechtigungsinformation vorzugsweise mit der personenbezogenen Sendung verknüpft sein. Unter einer entsprechenden Bereitstellung kann es sich um ein aktives Bereitstellen oder ein passives Bereitstellen handeln. Bei einem passiven Bereitstellen einer Berechtigungsinformation wird die Berechtigungsinformation von der Übergabeeinrichtung erfasst oder ausgelesen. Der Abholer und/oder das Fahrzeug muss lediglich Mittel bereithalten, die die Berechtigungsinformation enthält. Dabei kann es jedoch erforderlich sein, die Berechtigungsinformation in einer Weise zu präsentieren, so dass die Übergabeeinrichtung die Berechtigungsinformation erfassen bzw. auslesen kann. Dies kann insbesondere umfassen, die Mittel in einer geeigneten Weise in die Nähe oder an einen bestimmten Ort in Bezug zur Übergabeeinrichtung zu bringen. Unter einem aktiven Bereitstellen der Berechtigungsinformation wird dagegen die aktive Übermittlung der Berechtigungsinformation an die und/oder die Eingabe der Berechtigungsinformation an der Übergabeeinrichtung verstanden.

Die Berechtigungsinformation kann beispielsweise bevorzugt an einem Eingabefeld oder einem Interface der Übergabeeinrichtung von dem Abholer eingegeben werden. Die Berechtigungsinformation kann auch auf einer tragbaren elektronischen Vorrichtung, insbesondere auf einem Radio Frequency Identification Tags (RFID-Tag), einem Near Field Communication Tag (NFC-Tag), gespeichert sein, wobei die Übergabeeinrichtung die Berechtigungsinformation von der elektronischen Vorrichtung auslesen kann, wenn diese in eine bestimmte räumliche Beziehung zur Übergabeeinrichtung gebracht wird. Hierzu kann ein lokales Funknetz genutzt werden. Die Eingabe der Berechtigungsinformation kann auch mittels einer Karte erfolgen, auf der die Berechtigungsinformation gespeichert ist, etwa in einem Chip oder einem Magnetstreifen. Die Karte kann dann in eine Ausleseeinheit der Übergabeeinrichtung eingeführt werden, welche die Berechtigungsinformation ausliest. Unter einem Einführen der Karte in eine Ausleseeinheit kann auch das Durchziehen der Karte durch eine Ausleseeinheit verstanden werden. Alternativ oder zusätzlich ist es möglich, dass die Berechtigungsinformation in einem optisch auslesbaren Code, beispielsweise Barcode, insbesondere zweidimensionalem Barcode, gespeichert ist, der von der Übergabeeinrichtung ausgelesen werden kann. Grundsätzlich kann die Berechtigungsprüfung anhand eines Codes erfolgen, so dass diejenige Person als berechtigt angesehen werden kann, die den Code für die Übergabeeinrichtung bereitstellt und/oder eingibt. Dazu kann die zur Entgegennahme berechtigte Person sich beispielsweise eines Radio Frequency Idetification (RFID) Tags, eines Near Field Communication (NFC) Tags und/oder eines, insbesondere zweidimensionalen, Barcodes bedienen, der beispielsweise auch an oder im Fahrzeug angeordnet sein kann. Während der Barcode optischen ausgelesen werden kann, kann der RFID-Tag oder NFC-Tag bedarfsweise mittels eines lokalen Funknetzes ausgelesen werden. Alternativ oder zusätzlich, kann auch von dem/der zur Entgegennahme der personenbezogenen Sendung berechtigten Fahrzeug/Person eine Berechtigungsinformation, etwa in Form eines Codes, über ein lokales Funknetz oder ein Mobilfunknetz, beispielsweise Bluetooth oder Wireless Area Local Network (WLAN) und/oder ein Mobilfunknetz, insbesondere Global System for Mobile Communication (GSM), Universal Mobile Telecommunications System (UMTS) und/oder Long Term Evolution (LTE), an die Übergabeeinrichtung gesendet werden, anhand derer die Übergabeeinrichtung die Berechtigung des Fahrzeugs und/oder des Abholers prüfen kann. Die Berechtigung kann auch über einen, bedarfsweise rein mechanischen Schlüssel geprüft werden, mit dem die Übergabeeinrichtung zur Übergabe einer bestimmten mit dem Schlüssel gekoppelten personenbezogenen Sendung aktiviert werden kann. Selbstverständlich kann auch eine elektronische Speicherkarte mit einem Chip oder einem Magnetstreifen mit einer für die Übergabeeinrichtung lesbaren Berechtigungsinformation verwendet werden, um der Übergabeeinrichtung die Berechtigungsinformationen bereitzustellen. Es kann auch ein Code über ein Bedienfeld eingegeben werden. Es ist auch möglich und erhöht grundsätzlich die Sicherheit, wenn mehrere der vorgenannten Möglichkeiten kombiniert werden.

Um die Prüfung der Berechtigung eines Fahrzeugs und/oder eines Abholers für die Entgegennahme wenigstens einer personenbezogenen Sendung zweckmäßig durchführen zu können, kann sich die Übergabeeinrichtung Prüfinformationen bedienen. Diese können der Berechtigungsinformation entsprechen oder auf bestimmte und nachprüfbare Weise mit den Berechtigungsinformationen verknüpft sein. Zudem ist die Prüfinformation bevorzugt mit der personenbezogenen Sendung verknüpft. Dies gilt insbesondere dann, wenn keine Verknüpfung zwischen der Berechtigungsinformation und der personenbezogenen Sendung besteht. Die Prüfinformation kann bedarfsweise von der personenbezogenen Sendung bereitgestellt werden und/oder bei der Hinterlegung der personenbezogenen Sendung in der Übergabeeinrichtung an die Übergabeeinrichtung übergeben werden, und zwar bedarfsweise verbunden mit der hinterlegten personenbezogenen Sendung. Das Übergeben der Prüfinformation an die Übergabeeinrichtung kann dabei durch eine Art Eingabe, durch ein Auslesen durch die Übergabeeinrichtung und/oder ein Senden an die Übergabeeinrichtung erfolgen.

Zur Zuordnung der personenbezogenen Sendung zu wenigstens einer Person oder wenigstens einem Fahrzeug kann die personenbezogene Sendung beispielswiese mit einem Radio Frequency Identification (RFID) Tag, einem Near Field Communication (NFC) Tag und/oder einem, insbesondere zweidimensionalen, Barcode versehen sein. Diese können eine Prüfinformation tragen, die optisch oder elektronisch, etwa mittels eines lokalen Funknetzes auszulesen ist. Auf diese Weise wird eine Prüfinformation bereitgestellt, anhand derer eine Zuordnung festgelegt und eine Berechtigung zur Abholung geprüft werden kann. Dabei kann die Prüfinformation bedarfsweise eigenständig von der Übergabeeinrichtung erfasst werden. Es kann aber auch beim Hinterlegen der personenbezogenen Sendung in der Übergabeeinrichtung eine Prüfinformation zur Zuordnung der personenbezogenen Sendung mit dem Fahrzeug an die Übergabeeinrichtung gesendet oder dort hinterlegt werden, etwa durch eine Eingabe an einem Bedienfeld. Die Prüfinformation wird dabei vorzugsweise von einer die personenbezogene Sendung hinterlegenden Person mit einem elektronischen Hilfsmittel an die Übergabeeinrichtung gesendet oder an der Übergabeeinrichtung eingegeben. Das Senden der Prüfinformation an die Übergabeeinrichtung kann beispielswiese über ein lokales Funknetz, etwa mittels eines Radio Frequency Identification (RFID) Tags, eines Near Field Communication (NFC) Tags und/oder eines Wireless Area Local Networks (WLAN) und/oder eines Mobilfunknetzes, insbesondere Global System for Mobile Communication (GSM), Universal Mobile Telecommunications System (UMTS) und/oder Long Term Evolution (LTE), erfolgen. Die Prüfinformation sollte dabei grundsätzlich derart sein, dass das entsprechende Fahrzeug vor der Übergabeeinrichtung oder eine in dem Fahrzeug befindliche Person anhand der Prüfinformation als zur Abholung der personenbezogenen Sendung berechtigt erkannt werden kann.

Für den Fall, dass eine Berechtigungsprüfung durch die Übergabeeinrichtung erfolgreich abgeschlossen worden ist, kann die personenbezogene Sendung bevorzugt durch die Übergabeeinrichtung an ein Seitenfenster, vorzugsweise das dem Fahrer des Fahrzeugs zugeordnete Seitenfenster, übergeben werden, von wo die personenbezogene Sendung durch den Abholer, insbesondere ohne das Fahrzeug zu verlassen, entgegengenommen und in das Fahrzeug verbracht werden kann. Bei Fahrzeugen bei denen kein Seitenfenster vorgesehen ist, kann die personenbezogene Sendung bevorzugt durch die Übergabeeinrichtung an eine Seite des Fahrzeugs, insbesondere die dem Fahrer des Fahrzeugs zugeordnete Seite des Fahrzeugs, übergeben werden. Die personenbezogene Sendung kann dann durch den Abholer problemlos, insbesondere ohne das Fahrzeug zu verlassen, entgegengenommen und in das Fahrzeug verbracht werden. Das Verbringen der personenbezogenen Sendung in das Fahrzeug durch den Abholer ist sowohl für den Abholer recht einfach und erfordert hinsichtlich der Übergabeeinrichtung keinen übermäßigen konstruktiven und steuerungstechnischen Aufwand. Das Seitenfenster kann dabei vom Abholer bzw. dem Fahrer des Fahrzeugs selbst geöffnet werden, um die wenigstens eine personenbezogene Sendung entgegennehmen zu können. Das Seitenfenster kann aber auch durch eine Ansteuerung über die Übergabeeinrichtung geöffnet werden. Die Übergabeeinrichtung kann dazu einen Steuerbefehl an einer Steuervorrichtung des Fahrzeugs senden, die infolge des Empfangs des Steuerbefehls das Öffnen eines Seitenfensters bewirkt, ohne dass es dabei des Eingriffs des Fahrers bzw. Abholers bedarf.

Alternativ oder zusätzlich kann nach erfolgreicher Berechtigungsprüfung zur Übergabe der wenigstens einen personenbezogenen Sendung wenigstens eine Tür des Fahrzeugs geöffnet werden, um die personenbezogene Sendung durch die Übergabeeinrichtung beispielsweise an das Fahrzeug zur Entgegennahme durch den Abholer oder bedarfsweise in das Fahrzeug zu übergeben. Bevor ein Öffnen der Tür bewirkt werden kann, kann es erforderlich sein, die Tür zunächst zu entriegeln. Dabei kann ein reibungsloser Ablauf der Übergabe der personenbezogenen Sendung dadurch erleichtert werden, dass der Abholer oder der Fahrer selbst die Tür des Fahrzeugs entriegelt und/oder öffnet. So lassen sich Fehlbedienungen seitens der Übergabeeinrichtung vermeiden. Die Tür kann dabei je nach Bedarf und Ausstattung des Fahrzeugs manuell oder elektrisch entriegelt und/oder geöffnet werden. Ein elektrisches Entriegeln und/oder Öffnen der Tür, bei dem bedarfsweise Elektromotoren zum Entriegeln und/oder Öffnen eingesetzt werden, ist jedoch der Einfachheit halber bevorzugt. Der Fahrer muss dann bedarfsweise nur eine bestimmte Eingabe am Fahrzeug ausführen, etwa einen entsprechenden Knopf drücken. Das Entriegeln und/oder Öffnen der Tür kann, sofern es das Fahrzeug ermöglicht, auch durch die Übergabeeinrichtung bewirkt werden. Dann sind entsprechende Eingriffe durch den Fahrer und/oder den Abholer entbehrlich, der dann das Verfahren zur Übergabe der personenbezogenen Sendung auch nicht in entsprechender Weise behindern kann.

Wenn eine Berechtigungsprüfung von der Übergabeeinrichtung erfolgreich abgeschlossen und zudem eine Tür, bedarfsweise nach dem Entriegeln der Tür, geöffnet worden ist, kann die wenigstens eine personenbezogene Sendung sehr komfortabel durch die Übergabeeinrichtung durch die offene Tür in das Fahrzeug, insbesondere auf eine Ladefläche, in den Fahrgastraum, in eine Ladebox oder in den Kofferraum, verbracht werden. Der Abholer muss dann die personenbezogene Sendung nicht selbst entgegennehmen und im Fahrzeug verstauen, was gerade bei großen Sendungen umständlich sein kann. Die Sendung wird dann vielmehr ohne Zutun und damit sehr komfortabel für den Abholer im Fahrzeug verstaut.

Ist die wenigstens eine personenbezogene Sendung erfolgreich an den Abholer, an das Fahrzeug und/oder in das Fahrzeug übergeben worden, kann es erforderlich sein, eine Tür wieder zu schließen und/oder zu verriegeln. Bedarfsweise kann es aber auch erforderlich sein, ein Seitenfenster wieder zu schließen und/oder zu verriegeln. Ein entsprechendes Verriegeln und/oder Verschließen kann dabei in für den Abholer sehr komfortabler Weise durch die Übergabeeinrichtung bewirkt werden, ohne dass der Fahrer und/oder Abholer hierbei eingreifen muss. Es kann aber, um das Verfahren zu vereinfachen und Fehlbedienungen zu vermeiden, vorgesehen sein, dass das Schließen und/oder Verriegeln der Tür und/oder des Seitenfensters durch den Abholer und/oder den Fahrer bewirkt wird, sei es manuell oder mit elektrischer Unterstützung, etwa durch entsprechende Elektromotoren.

Damit die Übergabeeinrichtung das Entriegeln, Verriegeln, Öffnen und/oder Schließen wenigstens einer Tür und/oder wenigstens eines Seitenfensters des Fahrzeugs bewirken kann, ohne dass der Fahrer und/oder der Abholer gefordert ist, dies selbst zu tun, kann die Übergabeeinrichtung bevorzugt wenigstens eine Steuerinformation an wenigstens eine Steuervorrichtung des Fahrzeugs senden. Als Folge des Erhalts und der Verarbeitung der Steuerinformation kann die Steuervorrichtung die wenigstens eine Tür und/oder das Seitenfenster des Fahrzeugs entriegeln, verriegeln, öffnen und/oder schließen. Dies erfolgt dann vorzugsweise über Aktuatoren des Fahrzeugs, insbesondere in Form von Elektromotoren.

Beispielsweise aus Sicherheitsgründen kann die Möglichkeit eines entsprechenden Entriegelns, Verriegelns, Öffnens und/oder Schließens einer Tür und/oder eines Seitenfensters direkt über die Übergabeeinrichtung unerwünscht sein. Damit eine entsprechende Steuerung nicht unbeabsichtigt erfolgen kann, ist es bedarfsweise bevorzugt, wenn die Übergabeeinrichtung zum Entriegeln, Verriegeln, Öffnen und/oder Schließen wenigstens einer Tür und/oder wenigstens eines Seitenfensters des Fahrzeugs eine Fernsteuerinformation an eine Fernsteuervorrichtung außerhalb des Fahrzeugs sendet und bei dem die Fernsteuervorrichtung infolge des Erhalts und der Verarbeitung der Fernsteuerinformation einer Fernaktivierungsinformation an wenigstens eine Steuervorrichtung des Fahrzeugs sendet. Infolge des Erhalts und der Verarbeitung der Fernaktivierungsinformation kann die wenigstens eine Steuervorrichtung des Fahrzeugs bedarfsweise die wenigstens eine Tür und/ das Seitenfenster des Fahrzeugs entriegeln, verriegeln, öffnen und/oder schließen. Über die Zwischenschaltung der Fernsteuervorrichtung wird eine direkte Steuerung des Fahrzeugs unterbunden und eine zusätzliche Sicherheit gegenüber einer unberechtigten Steuerung des Fahrzeugs erreicht.

Um eine Tür und/oder ein Seitenfenster über die Übergabeeinrichtung zu entriegeln, verriegeln, öffnen und/oder schließen, kann die Übergabeeinrichtung mit der Fernsteuervorrichtung und/oder die Fernsteuervorrichtung mit der Steuervorrichtung des Fahrzeugs über ein Mobilfunknetz miteinander kommunizieren. Hierbei kommt insbesondere eine Kommunikation mittels Global System for Mobile Communication (GSM), Universal Mobile Telecommunications System (UMTS) und/oder Long Term Evolution (LTE) in Frage, da diese einfach und sicher genutzt werden können. Die Kommunikation zwischen der Übergabeeinrichtung und der Fernsteuervorrichtung einerseits und/oder der Fernsteuervorrichtung und der Steuervorrichtung des Fahrzeugs andererseits ist dabei vorzugsweise derart, dass die zum Entriegeln, Verriegeln, Öffnen und/oder Schließen der Tür und/oder des Seitenfensters erforderlichen Informationen übertragen werden können. Diese Informationen sind dabei vorzugsweise unabhängig von den Berechtigungsinformationen und/oder Prüfinformationen für die Ermittlung der Berechtigung eines Fahrzeugs und/oder eine Abholers zur Entgegennahme einer personenbezogenen Sendung. Dies führt zu einer erheblichen Vereinfachung und ist möglich, weil die Kommunikation zwischen der Fernsteuervorrichtung und der Übergabeeinrichtung und/oder der Steuervorrichtung des Fahrzeugs erst nach einer erfolgreichen Berechtigungsprüfung erfolgt. Gleichwohl kann natürlich auch die Kommunikation der Fernsteuervorrichtung und der Übergabeeinrichtung und/oder der Steuervorrichtung des Fahrzeugs verschlüsselt erfolgen und/oder wenigstens eine anderweitige Berechtigungsprüfung umfassen.

Alternativ oder zusätzlich kann vorgesehen sein, dass die Übergabeeinrichtung, das Fahrzeug, der Abholer und/oder die Steuervorrichtung miteinander durch eine lokale Funknetztechnik, wie Radio Frequency Identification (RFID), Near Field Communication (NFC), Bluetooth und/oder Wireless Local Area Network (WLAN), und/oder eine Mobilfunktechnik, insbesondere Global System for Mobile Communication (GSM), Universal Mobile Telecommunications System (UMTS) und/oder Long Term Evolution (LTE), miteinander kommunizieren. Die Kommunikation der Übergabeeinrichtung mit der Steuervorrichtung des Fahrzeugs kann insbesondere dem Zweck dienen, von der Übergabeeinrichtung Steuerinformationen an die Steuervorrichtung des Fahrzeugs zu senden, was vorzugsweise erst nach einer weiteren Berechtigungsprüfung für die Kommunikation der Übergabeeinrichtung mit der Steuervorrichtung des Fahrzeugs erfolgt. Die Kommunikation zwischen dem Abholer und/oder dem Fahrzeug einerseits und der Übergabeeinrichtung andererseits erfolgt dabei insbesondere zum Zweck der Bereitstellung der Berechtigungsinformationen zur Durchführung der Berechtigungsprüfung dahingehend, ob der Abholer und/oder das Fahrzeug zur Entgegennahme der wenigstens einen personenbezogenen Sendung berechtigt ist.

Um ein unbefugtes Entriegeln, Verriegeln, Öffnen und/oder Schließen der wenigstens einen Tür und/oder des Seitenfensters zu verhindern, kann es möglich sein, das Entriegeln, Verriegeln, Öffnen und/oder Schließen der wenigstens einen Tür und/oder des Seitenfensters über die Übergabeeinrichtung, bedarfsweise unter Zwischenschaltung der Fernsteuervorrichtung zu blockieren. Dies kann etwa durch den Fahrer erfolgen, der im Fahrzeug eine bestimmte Eingabe tätigt, insbesondere eine bestimmte Taste drückt. Die Fernsteuervorrichtung und/oder die Steuervorrichtung ermittelt dann vorzugsweise, ob ein Entriegeln, Verriegeln, Öffnen und/oder Schließen der wenigstens einen Tür und/oder eines Seitenfensters zur Übergabe der wenigstens einen personenbezogenen Sendung freigegeben und/oder blockiert ist. Dabei ist weiter vorzugsweise die Fernsteuervorrichtung nur dann involviert, wenn die Übergabeeinrichtung und die Steuervorrichtung des Fahrzeugs über die Fernsteuervorrichtung kommunizieren. Andernfalls, bedarfsweise aber auch bei Einbindung der Fernsteuervorrichtung, erfolgt die Prüfung durch die Steuervorrichtung. Das Entriegeln, Verriegeln, Öffnen und/oder Schließen der wenigstens einen Tür und/oder des Seitenfensters erfolgt nur dann, wenn dies auch freigegeben ist. Ist dies blockiert, erfolgt dagegen kein Entriegeln, Verriegeln, Öffnen und/oder Schließen der wenigstens einen Tür und/oder des Seitenfensters. Mit anderen Worten kann zur Vermeidung einer unbefugten Steuerung bestimmter Funktionen des Fahrzeugs vorgesehen sein, dass eine Fernaktivierungsinformation zum Entriegeln, Verriegeln, Öffnen und/oder Schließen der Tür und/oder des Seitenfensters nur im Falle der Freigabe an die Steuervorrichtung gesendet wird. Es kann aber auch, und zwar bedarfsweise unabhängig davon, ob eine Kommunikation der Steuervorrichtung des Fahrzeugs mit einer Fernsteuervorrichtung oder direkt mit der Übergabeeinrichtung erfolgt, vorgesehen sein, dass die Steuervorrichtung des Fahrzeugs nur im Falle der Freigabe ein Entriegeln, Verriegeln, Öffnen und/oder Schließen der Tür und/oder des Seitenfensters zulässt, dies ansonsten aber verhindert.

Damit eine Tür des Fahrzeugs auch ohne Einbeziehung der Steuervorrichtung des Fahrzeugs entriegelt, verriegelt, geöffnet und/oder geschlossen werden kann, kann die Übergabeeinrichtung eine Bedieneinrichtung aufweisen. Diese Bedieneinrichtung kann die Tür manuell betätigen und dabei die Bedienung der Tür durch den Abholer imitieren, so dass der Abholer entsprechend entlastet wird. So kann letztlich bedarfsweise der Komfort für den Abholer gesteigert werden. Besonders bevorzugt ist es dabei, wenn die Bedieneinrichtung in Kontakt mit der wenigstens einen Tür gebracht wird, und zwar derart, dass die wenigstens eine Tür entriegelt, verriegelt, geöffnet und/oder verschlossen werden kann. Die Imitation der Bedienung durch den Abholer wird dabei verbessert, wenn die Bedieneinrichtung einen Greifarmabschnitt und/oder einen Handabschnitt umfasst. Bedarfsweise kann so ein Arm und/oder eine Hand einer Person nachgebildet werden. Dies verringert gleichzeitig die Wahrscheinlichkeit einer Fehlbedienung der Tür, insbesondere einer Beschädigung der Tür.

Um die Übergabe der personenbezogenen Sendung an und/oder in das Fahrzeug einfach und komfortabel bewerkstelligen zu können, kann die wenigstens eine personenbezogene Sendung über eine Transporteinrichtung an und/oder in das Fahrzeug übergeben werden. Beim Abholen einer personenbezogenen Sendung erfolgt vorzugsweise zunächst die Berechtigungsprüfung. Ist diese erfolgreich abgeschlossen worden, kann die wenigstens eine personenbezogene Sendung, für welche die Berechtigungsprüfung erfolgreich abgeschlossen worden ist, innerhalb der Übergabeeinrichtung zu einer Transporteinrichtung transportiert werden. Hierzu sind aus dem Bereich der automatisierten Lagerhaltung unterschiedliche Mittel bekannt, aus denen ohne Weiteres für die vorliegende Anwendung geeignete Mittel ausgewählt werden können. In einem konstruktiv und steuerungstechnisch einfachen Fall, der insbesondere zur Übergabe personenbezogener Sendungen an Fahrzeuge bevorzugt sein kann, umfasst die Transporteinrichtung ein Förderband und/oder einen Rollenförderer. Letzteres ist besonders zweckmäßig, wenn die Gewichtskraft der personenbezogenen Sendung ausgenutzt werden kann, um die personenbezogene Sendung ohne weiteren Antrieb entlang des Rollenförderers zum Fahrzeug zu transportieren. Insbesondere für den Fall, dass die wenigstens eine personenbezogene Sendung in das Fahrzeug übergeben wird, kann die Transporteinrichtung einen, insbesondere mehrgelenkigen, Greifarm und/oder einen Teleskoparm umfassen. Diese lassen sich in einfacher Weise so verstellen, dass das Übergeben einer personenbezogenen Sendung in ein Fahrzeug problemlos möglich ist.

Um den konstruktiven und steuerungstechnischen Aufwand für die Übergabeeinrichtung gering zu halten, kann es zweckmäßig sein, wenn die Bedieneinrichtung und die Transporteinrichtung wenigstens teilweise in einer gemeinsamen Einrichtung, beispielweise einer Bedien- und Transporteinrichtung, zusammengefasst sind. Es existiert also bedarfsweise weder eine separate Bedieneinrichtung noch eine separate Transporteinrichtung. Dann kann die Transporteinrichtung Teile der Bedieneinrichtung oder umgekehrt umfassen.

Um die Übergabeeinrichtung effektiv einsetzen zu können, bietet es sich an, wenn in der Übergabe eine ganze Reihe von personenbezogenen Sendungen separat voneinander zur Abholung bereitgehalten werde können. Dabei ist es weiter bevorzugt, wenn unterschiedliche personenbezogene Sendungen unterschiedlichen Personen oder Fahrzeugen zugeordnet sind. Dann kann eine zur Entgegennahme einer personenbezogenen Sendung berechtigte Person oder ein solche Fahrzeug an der Übergabevorrichtung vorfahren, wobei dann jeweils bei der Berechtigungsprüfung geprüft wird, für welche in der Übergabeeinrichtung bereitgehaltene personenbezogene Sendungen jeweils die Berechtigung zur Entgegennahme der personenbezogenen Sendungen gegeben ist. Diese Sendung oder Sendungen werden dann an und/oder in das Fahrzeug übergeben. Anschließend kann ein weiteres Fahrzeug an der Übergabeeinrichtung vorfahren und das Prozedere erfolgt erneut, wobei dann im Falle einer erfolgreich abgeschlossenen Berechtigungsprüfung wenigstens eine andere personenbezogene Sendung an und/oder in das entsprechende Fahrzeug übergeben wird. In diesem Zusammenhang kann bevorzugt alternativ oder zusätzlich möglich sein, dass bei aufeinanderfolgenden Fahrzeugen, die Verfahren zur Übergabe der personenbezogenen Sendungen voneinander abweichen, also nacheinander unterschiedliche Verfahrensalterantiven durchgeführt werden. Es kann beispielsweise bei unterschiedlichen Fahrzeugen die Prüfinformation und/oder die Berechtigungsinformation in unterschiedlicher Weise bereitgestellt werden. Alternativ oder zusätzlich können auch aufeinanderfolgende Berechtigungsprüfungen in unterschiedlicher Weise erfolgen. Ebenso kann die Übergabe der personenbezogenen Sendungen unterschiedlich durchgeführt werden. Beispielsweise je nach vorhandenen Funktionalitäten des Fahrzeugs kann eine Übergabe an oder in das Fahrzeug erfolgen. Alternativ kann auch der Fahrer oder die Übergabeeinrichtung das Entriegeln, Öffnen, Schließen und/oder Verriegeln der Tür und/oder des Seitenfensters bewirken. Weitere Unterschiede sind denkbar und für den Fachmann aus dem Kontext der vorstehenden Beschreibung ohne Weiteres ersichtlich.

Nachfolgend wird die Erfindung anhand einer lediglich Ausführungsbeispiele darstellenden Zeichnung näher erläutert. In der Zeichnung zeigt
- Fig. 1A-G: Verfahrensschritte eines erfindungsgemäßen Verfahrens in einer schematischen Darstellung und
- Fig. 2: einen schematisches Fließbild des Verfahrens nach Fig. 1A-G

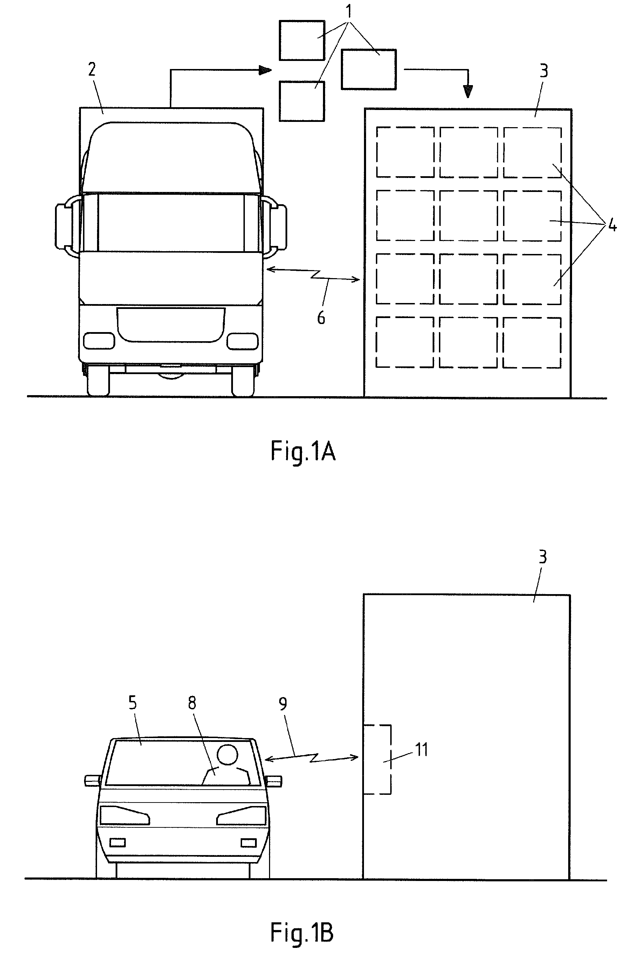

In der Fig. 1A ist eine personenbezogene Sendungen 1 enthaltendes Lieferfahrzeug 2 dargestellt. Die personenbezogenen Sendungen 1 werden von dem Lieferfahrzeug 2 an eine Übergabeeinrichtung 3 zur Übergabe der personenbezogenen Sendungen 1 abgegeben und in der Übergabeeinrichtung 3 in Lagereinheiten 4 hinterlegt und bis zur Übergabe der personenbezogenen Sendung 1 an ein berechtigtes Fahrzeug 5 oder an einen berechtigten Abholer in der Übergabeeinrichtung 3 gelagert. Das Hinterlegen der personenbezogenen Sendungen 1 in Lagereinheiten 4 kann dazu dienen, dass die Übergabeeinrichtung 3 stets durch die Position der Lagereinheiten 4 über die Position der personenbezogene Sendungen 1 in der Übergabeeinheit 3 informiert ist. Zu diesem Zweck kann der Übergabeeinrichtung 3 mitgeteilt werden, in welcher Lagereinheit 4 sich eine bestimmte personenbezogene Sendung 1 befindet.

Beim Hinterlegen der personenbezogenen Sendungen 1 durch eine Bedienperson wird von der Bedienperson zudem mit Hilfe einer elektronischen Vorrichtung für jede personenbezogene Sendung 1 eine Prüfinformation 6 an die Übergabeeinrichtung 3 gesendet, die vorzugsweise mit der jeweiligen personenbezogenen Sendung 1 verknüpft sein kann. Dies kann mittels eines lokalen Funknetzes, beispielsweise Bluetooth und/oder Wireless Local Area Network (WLAN), und/oder ein Mobilfunknetz, insbesondere Global System for Mobile Communication (GSM), Universal Mobile Telecommunications System (UMTS) und/oder Long Term Evolution (LTE) erfolgen. Alternativ dazu können die personenbezogenen Sendungen 1 aber auch Mittel aufweisen, welche die Prüfinformation 6 auslesbar für die Übergabeeinrichtung 3 bereithalten. Dazu kommen Radio Frequency Identification (RFID) Tag oder Near Field Communication (NFC) Tag sowie Barcodes in Frage. Das Auslesen kann dann optischen oder elektronisch, etwa mittels eines lokalen Funknetzes erfolgen. Zudem können die Prüfinformationen 6 auch über eine geeignete Eingabevorrichtung 7 an der Übergabeeinrichtung 3 eingegeben und dabei bedarfsweise mit den jeweiligen personenbezogenen Sendungen 1 verknüpft werden. Die Prüfinformationen 6 können über die Übergabeeinrichtung 3 auch mit einer Lagereinheit 4 verknüpft sein, in der die der Prüfinformation 6 zugeordneten personenbezogenen Sendungen 1 zur Abholung bereitgehalten werden. Dies kann beispielsweise einfach und zuverlässig dadurch erfolgen, dass die Übergabeeinheit 3 eine leere Lagereinheit 4 zur Hinterlegung einer neuen personenbezogenen Sendung 1 anbietet. Wird nun eine Prüfinformation 6 an die Übergabeeinrichtung 3 übergeben, kann die Übergabeeinrichtung 3 die Prüfinformation 6 mit der entsprechenden Lagereinheit 4 verknüpfen und auf diese Weise mit der in der entsprechenden Lagereinheit 4 bereitgestellten personenbezogenen Sendung 1 verbunden werden.

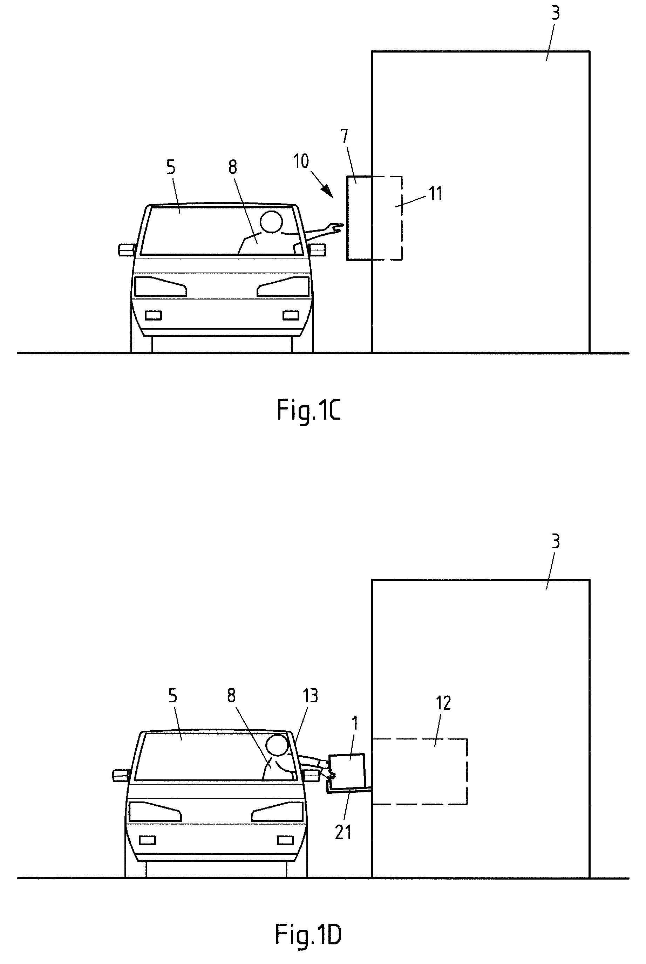

Zum Abholen einer personenbezogenen Sendung 1 fährt ein Fahrzeug 5 neben die Übergabeeinrichtung 3. Das Fahrzeug 5 könnte bedarfsweise auch in die Übergabeeinrichtung 3 fahren, wenn die Übergabeeinrichtung 3 dazu ausgebildet ist. Das Fahrzeug 5 ist mit einer in der Übergabeeinrichtung 3 hinterlegten personenbezogenen Sendung 1 verknüpft. Diese Verknüpfung ist entweder direkt zwischen der personenbezogenen Sendung 1und dem Fahrzeug 5 gegeben oder aber über den Umweg eines Abholers 8, der sich mit dem entsprechenden Fahrzeug 5 zur Übergabeeinrichtung 3 bewegt hat. Das Fahrzeug 5 und/oder der Abholer 8 senden in dem in der Fig. 1B dargestellten Fall eine Berechtigungsinformation 9 an die Übergabeeinrichtung 3. Dies kann beispielsweise über ein lokalen Funknetz, etwa mittels Bluetooth oder Wireless Local Area Network (WLAN), und/oder ein Mobilfunknetz, insbesondere Global System for Mobile Communication (GSM), Universal Mobile Telecommunications System (UMTS) und/oder Long Term Evolution (LTE) erfolgen. Alternativ kann die Berechtigungsinformation 9 aber auch gemäß Fig. 1B von dem Fahrzeug 5 und/oder dem Abholer 8 auf einem Trägermedium, etwa einem Radio Frequency Identification (RFID)-Tag, Near Field Communication (NFC)-Tag oder Barcode bereitgehalten werden, so dass die Übergabeeinrichtung 3 die Berechtigungsinformation 9 auslesen kann. Die Berechtigungsinformation 9 kann auch über eine geeignete Eingabevorrichtung 7 an der Übergabeeinrichtung 3 eingegeben und dabei bedarfsweise mit den jeweiligen personenbezogenen Sendungen 1 verknüpft werden. Die Eingabe kann dabei händisch erfolgen oder es kann eine Karte mit darauf gespeicherter Berechtigungsinformation 9 in eine Ausleseeinheit 10 eingeführt werden, was durch die Darstellung gemäß Fig. 1C symbolisiert wird.

In einem nächsten Schritt ermittelt eine Prüfeinheit 11, ob die bereitgestellte Berechtigungsinformation 9 eine Berechtigung zur Entgegennahme einer in der Übergabeeinrichtung bereitgehaltenen personenbezogenen Sendung 1 darstellt. Dazu kann ein Vergleich der Berechtigungsinformation 9 mit der Prüfinformation 6 erfolgen. Sind etwa beide Informationen 6,9 identisch oder auf eine vorbestimmte Weise miteinander verknüpft, etwa indem beide Informationen 6,9 mit der personenbezogenen Sendung 1 oder einen Algorithmus verknüpft sind, so wird die Berechtigungsprüfung erfolgreich abgeschlossen. Daraufhin wird die personenbezogene Sendung 1, zu deren Entgegennahme der Abholer 8 und/oder das Fahrzeug 5 berechtigt sind, insbesondere von einer Fördereinheit 12 der Übergabeeinrichtung 3 zur einer Transporteinrichtung 21, etwa in Form eines Förderbands, gefördert. Die Transporteinrichtung 12 transportiert die personenbezogene Sendung 1 dann weiter in Richtung des Fahrzeugs 5 und übergibt die personenbezogene Sendung 1 in dem in der Fig. 1D dargestellten Fall an das Fahrzeug 5, und zwar so, dass der Abholer 8 die personenbezogene Sendung 1 entgegennehmen und ins Fahrzeug 5 verbringen kann, wenn das Seitenfenster 13 geöffnet ist.

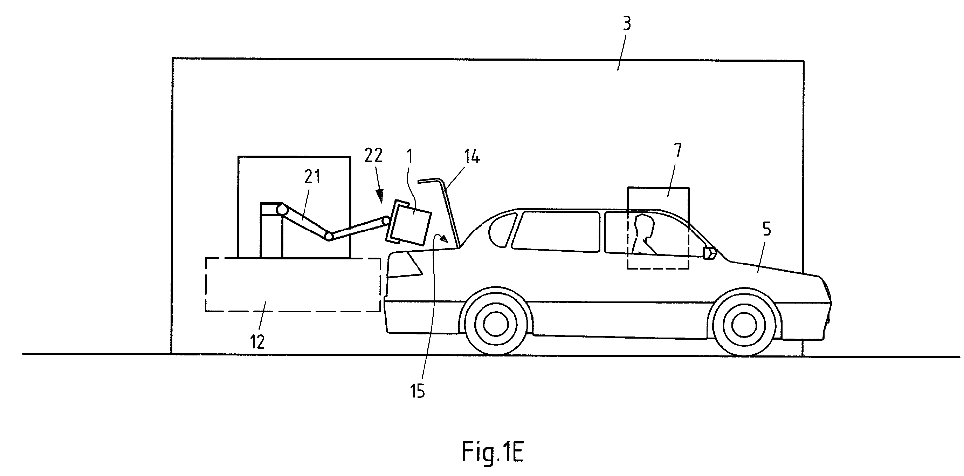

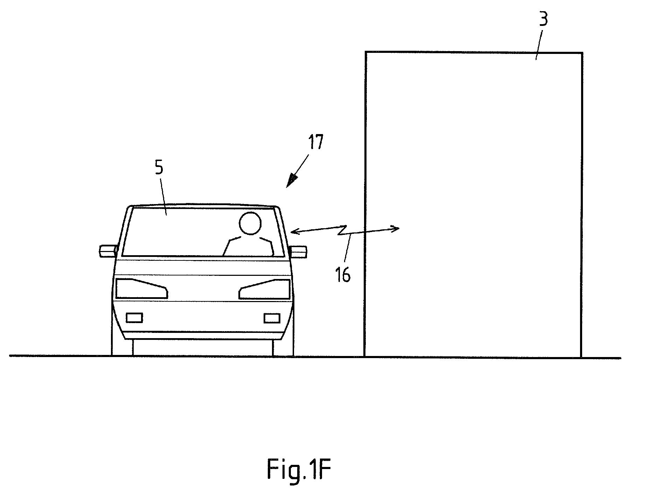

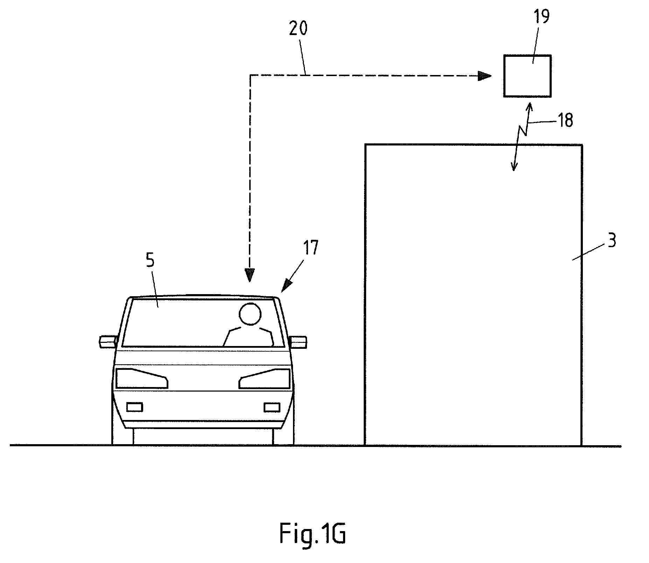

Alternativ kann die personenbezogene Sendung 1 gemäß Fig. 1E von der Fördereinheit 12 zu einer Transporteinrichtung 21 in Form eines mehrgelenkigen Greifarms gefördert werden. Der Greifarm ergreift dann die personenbezogene Sendung 1 und übergibt die personenbezogene Sendung 1 in das Fahrzeug 5. Im in der Fig. 1F dargestellten Fall erfolgt die Übergabe durch eine geöffnete Tür 14, in Form eines Kofferraumdeckels, in einen Kofferraum 15. In der Fig. 1 ist zudem schematisch eine optionale Eingabevorrichtung 7 zur Eingabe der Berechtigungsinformation 9 durch den Abholer 8 dargestellt.

Der Abholer 8 kann bedarfsweise die Seitenscheibe 13 oder die Tür 14 selbst öffnen. Im Falle der Seitenscheibe 13 ist dies in der Regel unkritisch, da die Seitenscheibe 13 typischerweise vom Fahrersitz bedient werden kann. Dies gilt umso mehr wenn dies mittels eines elektrischen Fensterhebers motorisch unterstützt erfolgt. Im Falle der Tür 14 ist dies unter Umständen aufwendiger. Bei einigen Fahrzeugen 5 ist es erforderlich, auszusteigen, um eine Tür 14 zu öffnen, insbesondere wenn es sich nicht um die Fahrertür handelt. Dies gilt oft auch für die den Kofferraum 15 verschließende Tür 14, die auch als Kofferraumdeckel oder Heckklappe bezeichnet werden kann. In einigen Fahrzeugen ist es möglich, eine Tür 14, insbesondere den Kofferraumdeckel bzw. die Heckklappe vom Fahrersitz aus elektrisch zu entriegeln. In anderen Fahrzeugen 5 ist es zudem möglich, eine Tür 14, insbesondere den Kofferraumdeckel bzw. die Heckklappe vom Fahrersitz aus zu öffnen, und zwar insbesondere federunterstützt und/oder motorisch unterstützt. Diese Funktionen können das vorliegend beschriebene Verfahren für den Abholer weiter erleichtern und damit komfortabler gestalten.

Sofern das entsprechende Fahrzeug 5 die Möglichkeit bietet, kann die Tür 14 oder das Seitenfenster 13 auch von der Übergabeeinrichtung 3 geöffnet und/oder geschlossen werden, wie dies in der Fig. 1F schematisch dargestellt ist. Dazu kann die Übergabeeinrichtung 3 Steuerinformationen 16 an eine Steuervorrichtung 17 des Fahrzeugs 5 senden. Die Steuervorrichtung 17 bewirkt dann nach Empfang und Verarbeitung der Steuerinformationen 16 das Öffnen und/oder das Schließen der Tür 14 oder des Seitenfensters 13. In gleicher Weise kann alternativ oder zusätzlich auch insbesondere die Tür 14, bedarfsweise aber auch das Seitenfenster 13 entriegelt und/oder verriegelt werden. Auch zu diesem Zweck sendet die Übergabeeinrichtung 3 eine Steuerinformation 16 an die Steuervorrichtung 17 des Fahrzeugs 5. Nach Empfang und Verarbeitung der Steuerinformation 16 bewirkt dann die Steuervorrichtung 17 bedarfsweise das Schließen und/oder das Verriegeln der Tür 14 oder des Seitenfensters 13. Dabei wird der Ablauf der einzelnen Verfahrensschritte vorzugsweise von der Übergabeeinrichtung so koordiniert, dass das Entriegeln und/oder Öffnen vor der Übergabe der personenbezogenen Sendung 1 an oder in das Fahrzeug 5 erfolgt. Es erfolgt dann bedarfsweise eine Kommunikation zwischen der Übergabeeinrichtung 3 und der Steuervorrichtung 17, die sicherstellt, dass vor der Übergabe eine Öffnung der Tür 14 oder des Seitenfensters 13 erfolgt ist und/oder dass das Schließen und/oder Verriegeln der Tür 14 oder des Seitenfensters 13 erst nach abgeschlossener Übergabe der personenbezogenen Sendung 1 erfolgt, um eine Beschädigung des Fahrzeugs 5 zu vermeiden.

Alternativ kann das Entriegeln, Öffnen, Schließen und/oder Verriegeln der Tür 14 oder des Seitenfensters 13 auch indirekt über die Übergabeeinrichtung 3 erfolgen, wie dies schematisch in der Fig. 1G dargestellt ist. In diesem Fall wird von der Übergabeeinrichtung 3 eine Fernsteuerinformation 18 an eine Fernsteuervorrichtung 19 gesendet. Diese prüft und verarbeitet die Fernsteuerinformation 18. Sodann kann die Fernsteuervorrichtung 19 eine Fernaktivierungsinformation 20 an die Steuervorrichtung 17 des Fahrzeugs 5 senden, das dann wiederum das Entriegeln, Öffnen, Schließen und/oder Verriegeln der Tür 14 oder des Seitenfensters 13 bewirken kann.

Ergänzend kann in der Steuervorrichtung 17 des Fahrzeugs 5 oder der Fernsteuervorrichtung 19 eine Prüfung erfolgen, ob das Entriegeln, Öffnen, Schließen und/oder Verriegeln der Tür 14 oder des Seitenfensters 13 freigegeben oder blockiert ist. Im letztgenannten Fall wird die entsprechende Aktion nicht ausgeführt bzw. keine entsprechende Fernaktivierungsinformation 20 an die Steuervorrichtung 17 des Fahrzeugs gesendet.

Die Übermittlung der Steuerinformation 16 von der Übergabeeinrichtung 3 an die Steuervorrichtung 17 des Fahrzeugs 5 kann durch eine lokale Funknetztechnik, wie Radio Frequency Identification (RFID), Near Field Communication (NFC), Bluetooth Wireless Local Area Network (WLAN), und/oder eine Mobilfunktechnik, insbesondere Global System for Mobile Communication (GSM), Universal Mobile Telecommunications System (UMTS) und/oder Long Term Evolution (LTE) erfolgen. Gleiches gilt im Prinzip auch für die Übertragung der Fernsteuerinformation 18 von der Übergabeeinrichtung 3 an die Fernsteuervorrichtung 19 und/oder die Übertragung der Fernaktivierungsinformation 20 von der Fernsteuervorrichtung 19 an die Steuervorrichtung 17 des Fahrzeugs 5, wobei Bluetooth aufgrund der geringen Übertragungsdistanz eher nicht bevorzugt oder gar nicht nutzbar ist.

Die Tür 14 des Fahrzeugs kann grundsätzlich auch durch eine Bedieneinheit 22 der Übergabeeinrichtung 3 manuell geöffnet werden, und zwar indem die Bedieneinheit 22 die Tür 14 durch Kontakt mit der Tür 14 bedient. Dies kann ein Entriegeln, ein Öffnen, ein Schließen und/oder ein verriegeln umfassen. Die Bedieneinheit kann dabei der Einfachheit halber in die Transporteinrichtung 21 integriert sein.

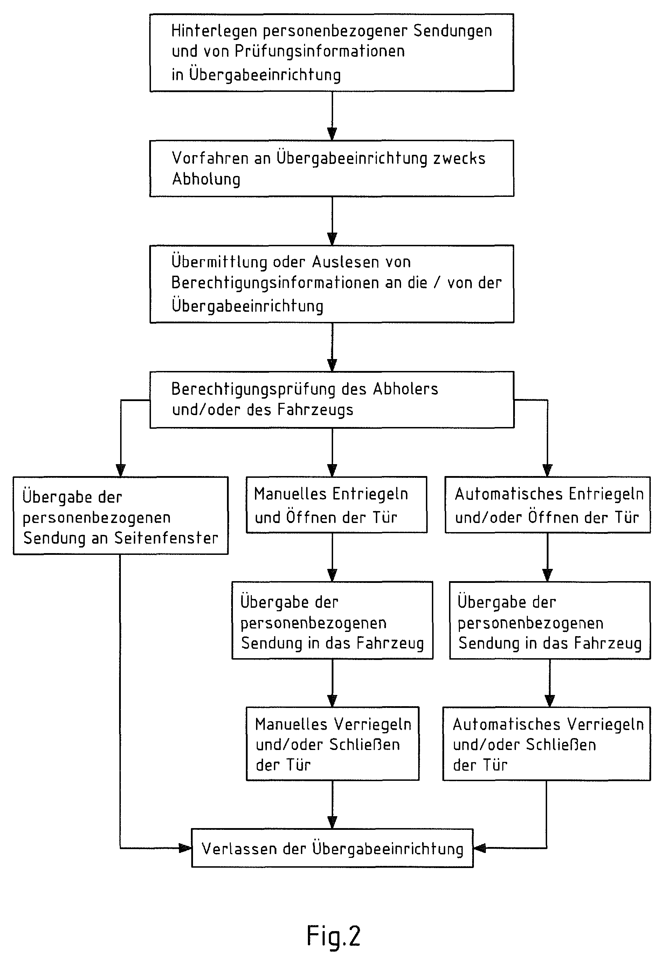

Vor dem Hintergrund der vorstehenden Ausführungen und den Fig. 1A-G kann das Verfahren zur Übergabe von personenbezogenen Sendungen auch wie in der Fig. 2 schematisch dargestellt zusammengefasst werden. Zunächst werden personenbezogene Sendungen in einer Übergabeeinrichtung hinterlegt. Die personenbezogenen Sendungen können dabei in Lagereinheiten hinterlegt werden, in denen die personenbezogenen Sendungen zuverlässig innerhalb der Übergabeeinrichtung gefördert werden können, um eine platzsparende Aufbewahrung der personenbezogenen Sendungen zu gewährleisten. Außerdem kann so sichergestellt werden, dass eine personenbezogene Sendung wieder aufgefunden wird, wenn ein berechtigter Abholer und/oder ein berechtigtes Fahrzeug zur Entgegennahme der personenbezogenen Sendung an der Übergabeeinrichtung erscheint. Die Lagereinheiten sind beispielsweise stapelbar, um in der Übergabeeinrichtung platzsparend angeordnet werden zu können.

Der Übergabeeinrichtung werden Prüfinformationen bereitgestellt, anhand derer geprüft werden kann, ob ein Abholer und/oder ein Fahrzeug zur Entgegennahme einer bestimmten personenbezogenen Sendung berechtigt ist. Die personenbezogene Sendung kann dazu beispielswiese mit einem Radio Frequency Identification (RFID) Tag, einem Near Field Communication (NFC) Tag und/oder einem, insbesondere zweidimensionalen, Barcode versehen sein, der von der Übergabeeinrichtung ausgelesen werden kann. Es kann aber auch eine Prüfinformation an die Übergabeeinrichtung gesendet oder dort hinterlegt werden, etwa durch eine Eingabe an einem Bedienfeld. Die Prüfinformation wird dabei bedarfsweise mit einem elektronischen Hilfsmittel an die Übergabeeinrichtung gesendet oder an der Übergabeeinrichtung eingegeben. Das Senden der Prüfinformation an die Übergabeeinrichtung kann beispielsweise mittels eines lokalen Funknetzes, etwa über Bluetooth, einen Radio Frequency Identification (RFID) Tag, einen Near Field Communication (NFC) Tag und/oder ein WLAN und/oder ein Mobilfunknetz erfolgen. Die Prüfinformationen können bedarfsweise anstelle den personenbezogenen Sendungen direkt zugeordnet mit den Lagereinheiten verknüpft werden, in denen die entsprechenden personenbezogenen Sendungen bereitgehalten werden.

Zu einem späteren Zeitpunkt fährt ein Fahrzeug an der Übergabeeinrichtung vor. Dabei kann das Fahrzeug bedarfsweise autonom fahren oder beispielsweise von einem Abholer bewegt werden. Jetzt wird von der Übergabeeinrichtung eine Berechtigungsinformation ausgelesen. Es kann aber auch eine Berechtigungsinformation an die Übergabeeinrichtung gesendet oder an einer Schnittstelle (Interface) an der Übergabeeinrichtung eingegeben werden. Die Berechtigungsinformation kann dazu auf einem Radio Frequency Identification Tag (RFID) oder einem Near Field Communication (NFC) Tag gespeichert sein. Die Eingabe der Berechtigungsinformation kann dabei auch mittels einer Karte erfolgen, auf der die Berechtigungsinformation gespeichert ist, etwa in einem Chip oder einem Magnetstreifen. Die Karte kann dann in eine Ausleseeinheit der Übergabeeinrichtung eingeführt werden. Alternativ oder zusätzlich ist es möglich, dass die Berechtigungsinformation in einem optisch auslesbaren Code, beispielsweise Barcode, insbesondere zweidimensionaler Barcode, gespeichert ist, der von der Übergabeeinrichtung ausgelesen werden kann. Bedarfsweise kann ein Radio Frequency Idetification (RFID) Tag, ein Near Field Communication (NFC) Tag und/oder ein, insbesondere zweidimensionaler, Barcode an dem Fahrzeug angeordnet sein. Die Berechtigungsinformation kann auch von dem Fahrzeug oder dem Abholer über ein lokales Funknetz, wie Bluetooth oder Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), an die Übergabeeinrichtung gesendet werden. Wenn der Übergabeeinrichtung die Berechtigungsinformation vorliegt, wird diese im Rahmen einer Berechtigungsprüfung in einer Prüfeinheit der Übergabeeinrichtung mit wenigstens einer Prüfinformation verglichen, die mit einer personenbezogenen Sendung direkt oder über die Lagereinheit verknüpft ist, in der die entsprechende personenbezogene Sendung bereitgehalten wird. Bei der Berechtigungsprüfung kann ermittelt werden, ob die Informationen identisch oder in einer vorbestimmten Weise miteinander verknüpft sind. Ist dies der Fall, gilt das Fahrzeug und/oder der Abholer, bei dem es sich vorzugsweise um den Adressaten der Sendung handeln kann, als berechtigt, die personenbezogene Sendung entgegenzunehmen. Infolgedessen wird die personenbezogene Sendung respektive die Lagereinheit mit der entsprechenden personenbezogenen Sendung mittels einer Fördereinheit zu einer Transporteinheit der Übergabeeinrichtung gefördert. Die Transporteinheit übernimmt dann die Übergabe der personenbezogenen Sendung an und/oder in das Fahrzeug. Hierbei sind unterschiedliche Verfahrensvarianten möglich, die bedarfsweise bei der Übergabe unterschiedlicher personenbezogener Sendungen an unterschiedliche Fahrzeuge und/oder Abholer nacheinander zum Einsatz kommen können, beispielsweise in Abhängigkeit von dem Fahrzeug, der Prüfinformation und/oder der Berechtigungsinformation. Beispielshaft werden nachfolgend drei dieser Verfahrensvarianten näher erläutert.

In einem Fall erfolgt mittels einer Transporteinrichtung, die in Form eines Rollenförderers oder eines Förderbands ausgebildet sein kann, die Übergabe der personenbezogenen Sendung an ein Seitenfenster des Fahrzeugs. Der Abholer der Sendung, der gleichzeitig der Fahrer des Fahrzeugs sein kann, muss dann dafür sorgen, dass das Seitenfenster geöffnet ist, so dass er die personenbezogene Sendung durch das Seitenfenster entgegennehmen und im Fahrzeug verstauen kann. Anschließend schließt der Abholer bzw. der Fahrer das Seitenfenster bedarfsweise wieder und verlässt mit dem Fahrzeug die Übergabeeinrichtung.

In einem anderen Fall entriegelt und öffnet der Fahrer des Fahrzeugs und/oder der Abholer eine Tür des Fahrzeugs, bei dem es sich um einen Kofferraumdeckel oder eine Heckklappe handeln kann, in manueller Weise. Dies bedeutet, dass der Fahrer das Entriegeln und das Öffnen selbst herbeiführt. Sofern dies vom Fahrzeug unterstützt wird, kann dies motorisch unterstützt oder automatisch erfolgen, was es dem Fahrer je nach Tür erlauben kann, im Fahrzeug zu bleiben. Der Fahrer muss dann beispielsweise nur einen Knopf des Fahrzeugs drücken oder eine entsprechende Einstellung am Fahrzeug vornehmen. Bedarfsweise befindet sich dann eine Heckklappe des Fahrzeugs in geöffneter Stellung. Die personenbezogene Sendung kann nun vorzugsweise mittels einer Transporteinrichtung in Form eines Greifarms durch die Heckklappe in den Kofferraum übergeben bzw. gelegt werden. Der Greifarm weit dabei vorzugsweise einen Greifabschnitt auf, der die personenbezogene Sendung greifen kann. Alternativ oder zusätzlich weist der Greifarm mehrerer Gelenke auf, um die personenbezogene Sendung zuverlässig und beschädigungsfrei in Fahrzeuge unterschiedlicher Art übergeben zu können. Sobald die personenbezogene Sendung in den Kofferraum übergaben worden ist und der Greifarm den Bereich des Kofferraums wieder verlassen hat, kann der Fahrer und/oder der Abholer die Tür, vorliegend die Heckklappe, wieder manuell schließen und verriegeln. Dies erfolgt dann insbesondere ebenfalls manuell und, soweit vom Fahrzeug vorgesehen, bedarfsweise motorisch unterstützt oder automatisch. Sodann kann der Abholer die Übergabeeinrichtung mit dem Fahrzeug wieder verlassen.

In noch einem anderen Fall wird das Entriegeln und Öffnen der Tür, etwa der Heckklappe, von der Übergabeeinrichtung gesteuert. Diese kann Steuerinformationen an eine Steuervorrichtung des Fahrzeugs senden, woraufhin die Steuervorrichtung ohne Eingreifen des Abholers das Entriegeln und das Öffnen der Tür bewirkt. Dies kann motorisch unterstützt und/oder unter Ausnutzung von Federkräften bewerkstelligt werden. Bedarfsweise wird dann der Übergabeeinrichtung von der Steuervorrichtung mitgeteilt, dass die Öffnung der Tür erfolgreich abgeschlossen ist. Dann kann die personenbezogene Sendung durch die geöffnete Tür in das Fahrzeug, etwa durch eine Heckklappe, in den Kofferraum übergaben werden. Dazu kann sich die Übergabeeinrichtung bedarfsweise wie zuvor beschrieben eines Greifarms bedienen. Wenn der Greifarm beispielsweise wieder eine Ausgangsstellung erreicht hat, wird dies von der Übergabeeinrichtung erkannt und es wird eine weitere Steuerinformation an die Steuervorrichtung des Fahrzeugs gesendet. Diese bewirkt, dass die Steuervorrichtung die geöffnete Tür des Fahrzeugs wieder schließt und verriegelt, und zwar bedarfsweise wieder automatisch und ohne den Eingriff des Fahrers. Insbesondere werden das Schließen und das Verriegeln der Tür motorunterstützt erfolgen. Sodann kann der Fahrer, bei dem es sich um den berechtigten Abholer handeln kann, die Übergabeeinrichtung wieder mit seinem Fahrzeug verlassen.

## Patentansprüche

1. Verfahren zur Übergabe wenigstens einer personenbezogenen Sendung (1),
- bei dem wenigstens eine bereits personenbezogene Sendung (1) zur Abholung mit einem mit der personenbezogenen Sendung (1) verknüpften Fahrzeug (5) in einer Übergabeeinrichtung (3) hinterlegt wird,
- bei dem ein mit der personenbezogenen Sendung (1) verknüpftes Fahrzeug (5) zur Übergabeeinrichtung (3) fährt,
- bei dem die Berechtigung des mit der personenbezogenen Sendung (1) verknüpften Fahrzeugs (5) und/oder die Berechtigung eines zur Entgegennahme der personenbezogenen Sendung (1) berechtigten Abholers (8) durch die Übergabeeinrichtung geprüft wird,
- bei dem die personenbezogene Sendung (1) bei erfolgreicher Berechtigungsprüfung durch die Übergabeeinrichtung (3) an das mit der personenbezogenen Sendung (1) verknüpfte Fahrzeug (5) übergeben wird, so dass der Abholer (8) die personenbezogene Sendung (1) aus dem Fahrzeug (5) entgegennehmen kann und/oder in das mit der personenbezogenen Sendung (1) verknüpfte Fahrzeug (5), insbesondere in den Innenraum, auf eine Ladefläche und/oder einen Kofferraum (15) des Fahrzeugs (5), übergeben wird.

2. Verfahren nach Anspruch 1,
bei dem das mit der personenbezogenen Sendung (1) verknüpfte Fahrzeug (5) und/oder der zur Entgegennahme der personenbezogenen Sendung (1) berechtigte Abholer (8) wenigstens eine Berechtigungsinformation (9) zur Prüfung der Berechtigung zur Entgegennahme wenigstens einer personenbezogenen Sendung (1) durch die Übergabeeinrichtung (3) bereitstellt.

3. Verfahren nach Anspruch 2,
- bei dem die Berechtigungsinformation (9) an einem Eingabefeld (7) der Übergabeeinrichtung (3) von dem Abholer (8) eingegeben wird,
- bei dem die Berechtigungsinformation (9) ein elektrisch auslesbarer, insbesondere auf einer tragbaren elektronischen Vorrichtung, insbesondere auf einem Radio Frequency Identification (RFID) Tag oder Near Field Communication (NFC) Tag, gespeichert ist und von der Übergabeeinrichtung (3) ausgelesen wird, bei dem die Berechtigungsinformation (9) ein optisch auslesbarer Code, beispielsweise Barcode, insbesondere zweidimensionaler Barcode, ist und von der Übergabeeinrichtung (3) ausgelesen wird und/oder
- bei dem die Berechtigungsinformation (9) über ein lokales Funknetz oder ein Mobilfunknetz, etwa Bluetooth, Wireless Local Area Network (WLAN) und/oder eine Mobilfunknetz, insbesondere Global System for Mobile Communication (GSM), Universal Mobile Telecommunications System (UMTS) und/oder Long Term Evolution (LTE) an die Übergabeeinrichtung (3) gesendet wird.

4. Verfahren nach einem der Ansprüch1 bis 3,
- bei dem zur Prüfung der Berechtigung zur Entgegennahme der personenbezogenen Sendung (1) durch die Übergabeeinrichtung (3) eine benötigte Prüfinformation (6) der Übergabeeinrichtung (3) bereitgestellt werden und, vorzugsweise,
- bei dem die Prüfinformationen (6) von der Übergabeeinrichtung (3) ausgelesen, an die Übergabeeinrichtung (3) gesendet und/oder an der Übergabeeinrichtung (3) eingegeben werden.

5. Verfahren nach Anspruch 4,
- bei dem die personenbezogene Sendung (1) einen Radio Frequency Identification Tag (RFID-Tag), einen Near Field Communication Tag (NFC-Tag) und/oder einen, insbesondere zweidimensionalen, Barcode enthaltend die Prüfinformation (6) aufweist und/oder
- bei dem die Prüfinformation mit einem elektronischen Hilfsmittel, vorzugsweise über ein lokales Funknetz oder Mobilfunknetz, etwa über ein Wireless Local Area Network (WLAN) und/oder ein Mobilfunknetz, insbesondere Global System for Mobile Communication (GSM), Universal Mobile Telecommunications System (UMTS) und/oder Long Term Evolution (LTE), an die Übergabeeinrichtung (3) gesendet wird.

6. Verfahren nach einem der Ansprüche 1 bis 5,
bei dem die personenbezogene Sendung (1) nach erfolgreicher Berechtigungsprüfung durch die Übergabeeinrichtung (3) an ein Seitenfenster (13), vorzugsweise das dem Fahrer des Fahrzeugs (5) zugeordnete Seitenfenster (13), übergeben wird, von wo die personenbezogene Sendung (1) durch den Abholer (8), insbesondere ohne das Fahrzeug (5) zu verlassen, entgegengenommen und in das Fahrzeug (5) verbracht werden kann und/oder
- bei dem die Übergabeeinrichtung (3) nach erfolgreicher Berechtigungsprüfung die wenigstens eine personenbezogene Sendung (1) durch eine geöffnete Tür (14) in das Fahrzeug (5), insbesondere auf eine Ladefläche, in den Fahrgastraum oder in den Kofferraum (15), verbringt.

7. Verfahren nach einem der Ansprüche 1 bis 6,
- bei dem die Übergabeeinrichtung (3) nach erfolgreicher Berechtigungsprüfung zur Übergabe der personenbezogenen Sendung (1) wenigstens eine Tür (14) und/oder ein Seitenfester (13) des Fahrzeugs (5) entriegelt und/oder öffnet, und/oder
- bei dem die Übergabeeinrichtung (3) nach erfolgreicher Übergabe der wenigstens einen personenbezogenen Sendung (1) an und/oder in das Fahrzeug (5) die wenigstens eine Tür (14) und/oder das Seitenfenster (13) verriegelt und/oder schließt, und /oder
- bei dem der Abholer (8) zur Übergabe der personenbezogenen Sendung (1) wenigstens eine Tür (14) und/oder ein Seitenfester (13) des Fahrzeugs (5) entriegelt, öffnet, verriegelt und/oder schließt.

8. Verfahren nach Anspruch 7,
- bei dem die Übergabeeinrichtung (3) zum Entriegeln, Verriegeln, Öffnen und/oder Schließen wenigstens einer Tür (14) und/oder eines Seitenfensters (13) des Fahrzeugs (5) eine Steuerinformation (16) an wenigstens eine Steuervorrichtung (17) des Fahrzeugs (5) sendet und
- bei dem die Steuervorrichtung (17) infolge des Erhalts und der Verarbeitung der Steuerinformation (16) die wenigstens eine Tür (14) des Fahrzeugs (5) entriegelt, verriegelt, öffnet und/oder schließt.

9. Verfahren nach Anspruch 7 oder 8,
- bei dem die Übergabeeinrichtung (3) zum Entriegeln, Verriegeln, Öffnen und/oder Schließen wenigstens einer Tür (14) des Fahrzeugs (5) eine Fernsteuerinformation (18) an eine Fernsteuervorrichtung (19) außerhalb des Fahrzeugs (5) sendet und
- bei dem die Fernsteuervorrichtung (19) infolge des Erhalts und der Verarbeitung der Fernsteuerinformation (18) einer Fernaktivierungsinformation (20) an wenigstens eine Steuervorrichtung (17) sendet und
- bei dem die wenigstens eine Steuervorrichtung (17) des Fahrzeugs (5) infolge des Erhalts und der Verarbeitung der Fernaktivierungsinformation (20) die wenigstens eine Tür (14) des Fahrzeugs (5) entriegelt, verriegelt, öffnet und/oder schließt.

10. Verfahren nach einem der Ansprüche 1 bis 9,
bei dem die Übergabeeinrichtung (3), das Fahrzeug (5), der Abholer (8) und/oder die Steuervorrichtung (17) miteinander durch eine lokale Funknetztechnik wie Radio Frequency Identification (RFID), Near Field Communication (NFC), Bluetooth, Wireless Local Area Network (WLAN) und/oder eine Mobilfunktechnik, insbesondere Global System for Mobile Communication (GSM), Universal Mobile Telecommunications System (UMTS) und/oder Long Term Evolution (LTE), miteinander kommunizieren, um die erforderlichen Informationen, insbesondere Berechtigungsinformationen (9) und Steuerinformationen (16) weiterzuleiten.

11. Verfahren nach Anspruch 9 oder 10,
bei dem einerseits die Übergabeeinrichtung (3) und die Fernsteuervorrichtung (19) und/oder andererseits die Fernsteuervorrichtung (19) und die Steuervorrichtung (17) miteinander durch eine Mobilfunktechnik, insbesondere Global System for Mobile Communication (GSM), Universal Mobile Telecommunications System (UMTS) und/oder Long Term Evolution (LTE), miteinander kommunizieren um die erforderlichen Informationen, insbesondere Fernsteuerinformationen (18) und Steuerinformationen (16) weiterzuleiten.

12. Verfahren nach einem der Ansprüche 8 bis 11,
- bei dem die Fernsteuervorrichtung (19) und/oder die Steuervorrichtung (17) ermittelt, ob ein Entriegeln, Verriegeln, Öffnen und/oder Schließen der wenigstens einen Tür (14) zur Übergabe der wenigstens einen personenbezogenen Sendung (1) freigegeben und/oder blockiert ist und, vorzugsweise,
- bei dem die Fernaktivierungsinformation (20) nur im Falle der Freigabe an die Steuervorrichtung (17) gesendet wird und/oder bei dem die Steuervorrichtung (17) nur im Falle der Freigabe die wenigstens eine Tür (14) und/oder das Seitenfenster (13) des Fahrzeugs (5) entriegelt, verriegelt, öffnet und/oder schließt.

13. Verfahren nach einem der Ansprüche 1 bis 12,
- bei dem eine Bedieneinrichtung (22) der Übergabeeinrichtung (3), insbesondere umfassend einen Greifarmabschnitt und/oder einen Handabschnitt, in Kontakt mit der wenigstens einen Tür (14) gebracht wird und
- bei dem die Bedieneinrichtung (22) über den Kontakt mit der wenigstens einen Tür (14) des Fahrzeugs (5) die wenigstens eine Tür (14) entriegelt, verriegelt, öffnet und/oder schließt.

14. Verfahren nach einem der Ansprüche 1 bis 13,
bei dem die wenigstens eine personenbezogene Sendung (1) über eine Transporteinrichtung (21), insbesondere einen Greifarm, einen Teleskoparm, ein Förderband und/oder einen Rollenförderer an und/oder in das Fahrzeug (5) übergeben wird.

15. Übergabeeinrichtung (3) zur Durchführung des Verfahren nach einem der Ansprüche 1 bis 14, mit wenigstens einer Lagereinheit (4) zum Lagern wenigstens einer personenbezogenen Sendung (1) mit einer Prüfeinheit (11) zur Prüfung einer Berechtigung eines Abholers (8) und/oder eines Fahrzeugs (5) und mit einer Transporteinheit (21) zum Transport der personenbezogenen Sendung (1) an und/oder in ein Fahrzeug (5).
